# EUROPEAN PATENT APPLICATION

(11) **EP 1 622 012 A2**
(43) Date of publication of application: **01.02.2006**
(21) Application number: 05104191.1
(22) Date of filing: 18.05.2005
(51) Int. Cl.: G06F 9/445

(54) **System and method for generating embedded resource updates for output device**

(30) Priority: 19.05.2004 US 848072
(71) Applicant: MICROSOFT CORPORATION, Redmond, WA 98052 (US)
(72) Inventor: Eversole, Adam, Redmond, WA 98052 (US); Ternasky, Joseph D., Redmond, WA 98052 (US); King, Joseph, Redmond, WA 98052 (US); Stokes, Michael, Redmond, WA 98052 (US); Byrd, Michael M., Redmond, WA 98052 (US); Parker, Robert L. C., Redmond, WA 98052 (US)
(74) Representative: Zimmer, Franz-Josef

(57) **Abstract**

A system and related techniques generate an update to control programming, such as firmware, to embed in an electronic document and transmit to a printer, facsimile or other output device. Compatible printers or other output devices according to embodiments of the invention may contain an intermediate language interpreter which receives, interprets and executes the embedded update in the electronic document. That update may include for example an update to the printer's firmware, downloaded forms, fonts or other updates or enhancements which may for instance stored into EPROM or other memory in the output device. Because the resource update is encapsulated in an intermediate language object which may be universally interpreted by compatible printers, facsimile machines and other devices, updates may be delivered with a need to generate specialized code or follow specialized procedures for specific manufacturer's products.

## Description

### CROSS-REFERENCE TO RELATED APPLICATION

The subject matter of this application is related to the subject matter of copending U.S. Patent Application Serial No. 10/__ filed April 30, 2004, attorney docket number MS1-2051US, entitled "Document Markup Methods and Systems", which application is assigned or under obligation of assignment to the same entity as this application, and which application is incorporated by reference herein.

### STATEMENT REGARDING FEDERALLY SPONSORED RESEARCH OR DEVELOPMENT

Not applicable.

### FIELD OF THE INVENTION

The invention relates to the field of computer software control of output devices, and more particularly to a platform for generating a firmware, font, template or other update for a printer or other output device and transmitting that resource or update to the device as embedded, intermediate language object in an electronic document.

### BACKGROUND OF THE INVENTION

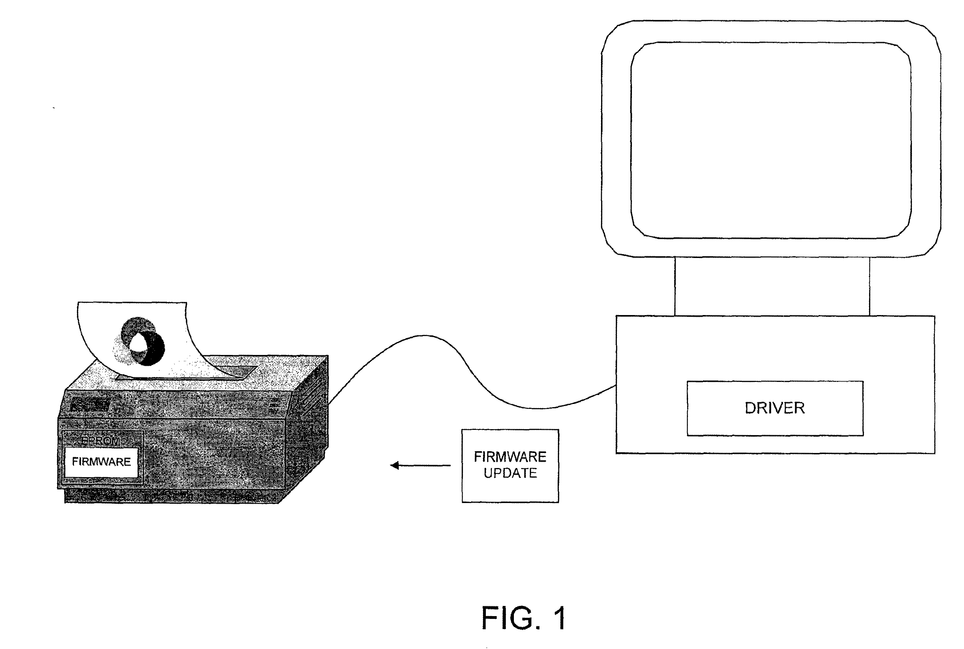

Laser, inkjet and other printers have operated for years under the limitation that getting updates into their firmware, or downloading fonts, forms or other enhancements or updates to such printer or other output devices is often a difficult task. As illustrated generally in Fig. 1, as one obstacle to reliable updates the firmware stored in the EPROM or other memory of printer devices is often specific to one manufacturer and may therefore rely upon specific drivers for that hardware, complicating the update process. Specialized tools or knowledge may be required to generate and transmit that code. Debugging and verifying that firmware or other control programming may be similarly difficult and error-prone.

Moreover, the updating of fonts, forms or other templates or content to the printer has likewise proved difficult in practice. In some commercial platforms, it has been known to drive fonts, forms or templates to a printer or other output device by embedding that data into a document, for example an Adobe™ Portable Document Format (PDF™) file or other document, and transmitting the resulting document to the printer. However, in known printer implementations those fonts, forms or other content are not persistent and generally must be transmitted to the printer repeatedly, document-by-document each time a new document is generated. Alternatively, low-level instructions such as code in Printer Control Language (PCL™) or other electronic form may be communicated to the printer over a serial, parallel or other port to dynamically form fonts or other content in printer RAM (random access memory), but that type of non-embedded control code is likewise not persistent and not extensible. Other problems in the maintenance, updating and use of printers and other output devices exist.

### SUMMARY OF THE INVENTION

The invention overcoming these and other problems in the art relates in one regard to a system and method for generating control resources for a printer or other output device, in which the control resources may be automatically embedded in an electronic document and passed to the printer or other output device without a necessity for special formatting or coding. In embodiments, the control resources may be encapsulated in an intermediate language object embedded in or associated with the electronic document, which intermediate language object may be interpreted or otherwise executed in the printer or other device. Because the printer or other output device may receive the firmware, font or other resource update based on a secure, programmable control infrastructure that is not dependent on specific device drivers or other idiosyncratic details, the updating and control of printers and printed output along with other types of output may be streamlined and made more reliable, powerful and flexible.

### BRIEF DESCRIPTION OF THE DRAWINGS

Fig. 1 illustrates an environment for printer firmware updates, according to known update technology.

Fig. 2 illustrates an environment in which resource updates may be generated and transmitted to an output device, according to embodiments of the invention.

Fig. 3 illustrates a logical architecture of a printer manager and update classes, according to an embodiment of the invention.

Fig. 4 illustrates overall processing for generating firmware and other control resources updates and embedding those updates in an electronic document, according to embodiments of the invention.

### DETAILED DESCRIPTION OF EMBODIMENTS

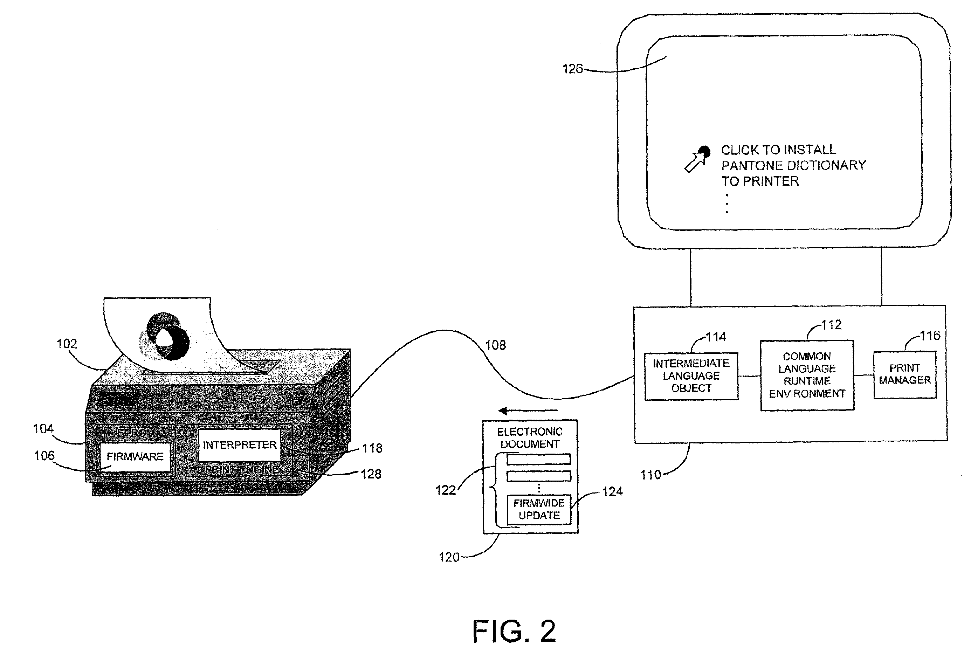

Fig. 2 illustrates an architecture in which a system and method for may operate, according to an embodiment of the invention. As illustrated in that figure, a printer 102 or other output device may communicate with a client 114 over connection 108 to perform updates and modifications to the resources of that output equipment. Printer 102 may contain, as illustrated, a print engine 128 which drives the physical media printing as well as firmware 106 which may be stored in EPROM (electronically programmable read only memory) 104 or other media. The print engine 128, which in embodiments may likewise reside in or execute from EPROM 104, may likewise contain an interpreter 118 to interpret, process and execute resource updates as described herein. The connection 108 joining the printer 102 or other output device to the client 114 may in embodiments be, include or interface to, for example, a serial port and connection, a parallel port and connection, a USB (Universal Serial Bus) port and connection, or other connections or channels.

A user operating the client 110 may use a user interface 126 to manipulate that machine or device to initiate the updating of output device resources in printer 142 or another output device. In embodiments as shown, the client 110 may contain a print manager 116, which may in embodiments be or include a service hosted by an operating system, as well as a common language runtime environment 112, which may similarly be incorporated in or be accessed by an operating system. The user may select an update, modification, patch or other alteration to the resources of printer 102 or other output device on user interface 126 as shown, and invoke the common language runtime environment 112 to perform that function. The update or updates chosen to be delivered to the printer 102 or other output device may include, for example, an update to firmware 106, a set of fonts, one or more document or other outlines or templates, or other resources or content for that output device.

According to embodiments of the invention in one regard, the update or updates chosen may be read or accessed from a CD-ROM or other media, be accessed or downloaded from the Internet or other network connection, or obtained from other media or channels. For example, in embodiments the manufacturer Web site for a particular model of printer or facsimile machine may be accessed to download and acquire that set of data, code or content.

The common language runtime environment 112 may receive the desired updates to the output device resources, and compile the code, instructions, content or data reflecting those updates to an intermediate language object 114. The intermediate language object 114 may be or include, in embodiments, interpretable or executable code. According to embodiments of the invention in another regard, the intermediate language object 114 may then be embedded, attached, linked to, or otherwise associated with an electronic document 120 for transmission to printer 102 or other output device. According to embodiments of the invention in one regard, the electronic document 120 may be or include an electronic document and related resources of the type described in the aforementioned U.S. Patent Application Serial No. 10/___ filed April 30, 2004, attorney docket number MS1-2051US, entitled "Document Markup Methods and Systems", or other electronic documents composed according to other componentized schema. The intermediate language object 114 may be embedded or associated with the electronic document 120 via the common language runtime environment 112, by action of the operating system, by an output-aware application such as advanced word processing packages, or other services or resources.

The electronic document 120 so generated may contain a set of document components 122, including text, graphics, links to other content as well, as illustrated, as a firmware update 124 or other resource update or modification. In other embodiments, the firmware update 124 or other resource update may be the only internal content of electronic document 120, when a "thin" document is so desired. The electronic document 120 may be transmitted to the printer 102 or other output device via connection 108, and received in print engine 128.

The print engine 128 may be configured to detect the presence of executable or interpretable code or instructions within the set of document components 122. In the case where such code or resources are present as illustrated, the print engine 128 may invoke an interpreter 118 to read the firmware update 124 or other update to the control or content of printer 102 and its operating program. The firmware update 124 may be encoded, for example, in assembler or assembler-like code, in C++ or XML (extensible Markup Language) code or data, or other executable or interpretable information. When the firmware update 124 is interpreted by print engine 128 it may be processed and executed to perform an update to firmware 106 of printer 102, for example to install updated shading routines, resolution enhancement, power management features, or other printing or operating features or components of the output device.

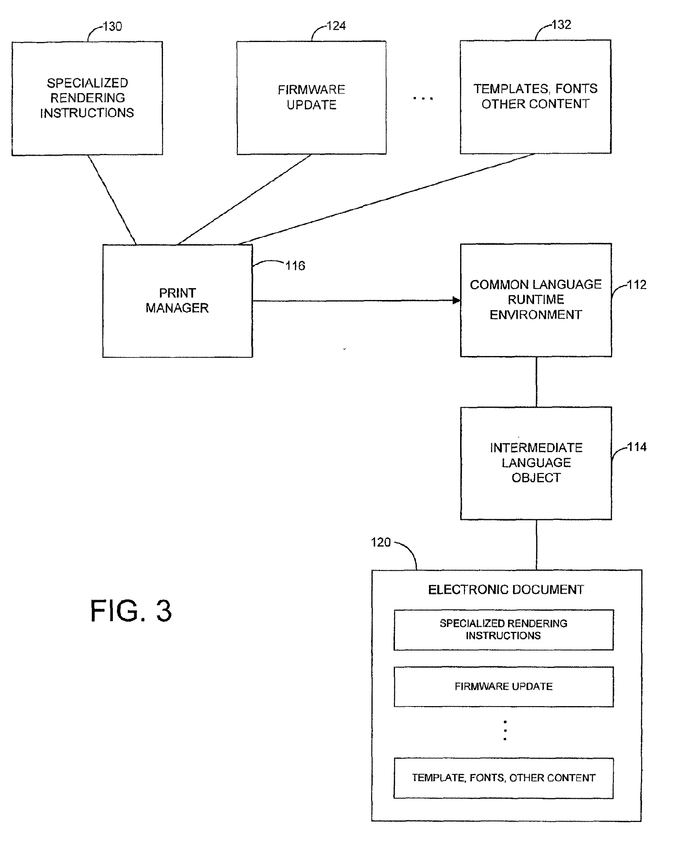

According to embodiments of the invention in a further regard and as illustrated in Fig. 3, the updates to the output device resources may include a variety of updates, upgrades, modifications and enhancements. As shown in that figure, the updates may include, for example, a firmware update 124 as illustrated, as well as other resource enhancements, such as specialized rendering instructions 130 and content 132 such as templates, fonts, forms, character sets or other content or data. Specialized rendering instructions 130 may be or include, for example, parameters for processing printed or outputted halftones, grayscales, vector processing or other updates, code or resources. The firmware update 124 may be or include, for example, halftone algorithms, Pantone™ dictionaries, toner color compensation algorithms, algorithms for gradient processing such as complex or non-linear gradients, kerning algorithms, adaptive or fractal image or output generation techniques, or other processing or intelligence.

The content 132 which may be embedded into electronic document 120 and transmitted or downloaded to printer 102 or other output device may include, for instance, forms (e.g., commercial forms such as sales receipts or airline reservations), fonts of different types, glyphs, character sets such as Unicode or language-specific characters, clip art, or other content or data. In embodiments as shown, the electronic document 120 may thereby incorporate more than one resource update depending which of these and other types of updated resources may be delivered. Other types or categories of resource updates are possible.

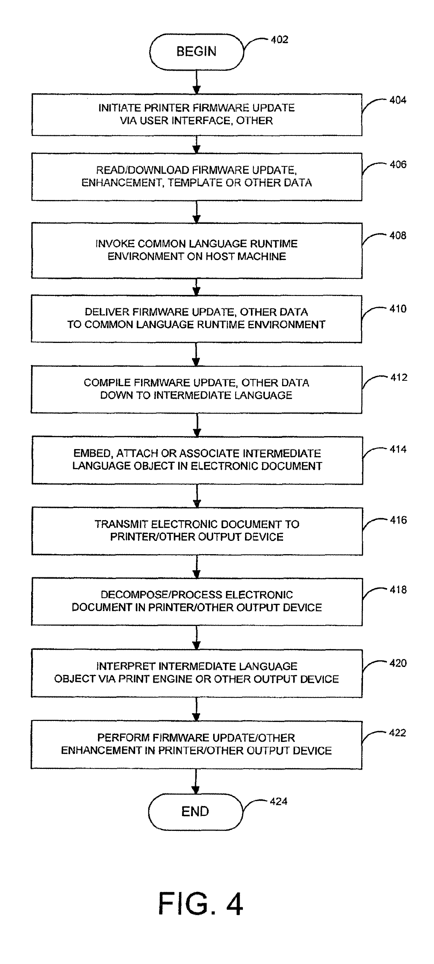

Fig. 4 illustrates overall processing for the generation and communication of output device resource updates, according to an embodiment of the invention. In step 402, processing may begin. In step 404, an output device resource update, such as a firmware update 124 or font or other resource or content update, may be initiated. In step 406, the output device resource update such as corresponding firmware, font, template or other resource or content update may be read, downloaded or otherwise accessed, for example by reading that data from a CD-ROM or other media, downloading that data from an Intemet site or accessing other data stores or channels. In step 408, the common language runtime environment 112 for hosted in client 110 may be invoked. In step 410, the firmware update 124 or other output device resource update read or accessed in that manner may be delivered to the common language runtime environment 112.

In step 412, the firmware update 124 or other output device resource update may be compiled in the common language runtime environment 112 down to an intermediate language object 114. The intermediate language object 114 may be or include code or instructions such as assembler, structured languages such as C++, XML or other language or code. In step 414, the intermediate language object 114 may be embedded, attached or otherwise associated with electronic document 120, for instance in the form of inline code or instructions, header data, or other formats or structures. In step 416, the electronic document 120 may be transmitted to printer 102 or other output device, for example over connection 108 such as a serial, parallel, USB or other connection or channel. In step 418, the electronic document 120 may be received, decomposed and processed in printer 102 or other output device, for example to enumerate the set of document components 122.

In step 420, the intermediate language object 114 may be interpreted in printer 102 or other output device, for example in interpreter 118 in print engine 128 or other resources. In step 422, the code, instructions or data so interpreted may be processed and executed to perform a firmware, font or other control or content update to the EPROM 104 of printer 102, or otherwise perform an update to the resources of the printer 102 or other output device. In step 424, processing may repeat, return to a prior processing point, jump to a further processing point or end.

The foregoing description of the invention is illustrative, and modifications in configuration and implementation will occur to persons skilled in the art. For instance, while the invention has generally been described in terms of generating and transmitting a firmware update 124 or other resource updates to a printer 102, in embodiments the output device receiving the resource update may be or include, for example, a facsimile machine, a copier, a scanner, a multifunction machine (e.g., printer/copier/scanner) or other equipment or hardware.

Similarly, while the invention has in embodiments been described as transmitting a firmware update 124 or other resource update in a single object, in embodiments the resource update may consist of multiple updates contained within a single electronic document 120, or updates or resources contained in multiple electronic documents. Other hardware, software or other resources described as singular may in embodiments be distributed, and similarly in embodiments resources described as distributed may be combined.

Moreover, while the invention has in general been described as updating the output device resources of a printer 102 when initiated via a separate client 110, in embodiments the updating of printer 102 or other output device may be initiated via other locations or resources, including for example at or via the printer 102 itself. For further instance, while the invention has generally been described in scenarios where a user operates a user interface 126 to select the firmware update 124 or other resource to be updated, in embodiments the firmware update 124 or other updated resource may be automatically transmitted to one or more printer 102 or other output device or devices, for instance via a collective push delivered over a network. The scope of the invention is accordingly intended to be limited only by the following claims.

## Claims

1. A system for generating resource updates for transmission to an output device, comprising:
an input interface to receive an output device resource update;
a common language runtime environment, communicating with the input interface to receive the output device resource update, the common language runtime environment generating an intermediate language object encapsulating the output device resource update and associating the intermediate language object with an electronic document; and
an output interface to communicate the electronic document and associated intermediate language object to an output device configured to execute the intermediate language object.

2. A system according to claim 1, wherein the output device resource update comprises at least one of a firmware update, a set of specialized rendering instructions and specialized content output.

3. A system according to claim 1, wherein the common language runtime environment is not output device-dependent.

4. A system according to claim 1, wherein the association of the intermediate language object to the electronic document comprises embedding within the electronic document.

5. A system according to claim 1, wherein the output device configured to execute the intermediate language object comprises an intermediate language interpreter to interpret the intermediate language object.

6. A system according to claim 1, wherein the output device comprises at least one of a printer, a facsimile machine, a copy machine, a scanner and a multifunction output device.

7. A method for generating resource updates for transmission to an output device, comprising:
receiving an output device resource update;
transmitting the output device resource update to a common language runtime environment;
generating an intermediate language object encapsulating the output device resource update in the common language runtime environment;
associating the intermediate language object with an electronic document; and
communicating the electronic document and associated intermediate language object to an output device configured to execute the intermediate language object.

8. A method according to claim 7, wherein the output device resource update comprises at least one of a firmware update, a set of specialized rendering instructions and specialized content output.

9. A method according to claim 7, wherein the common language runtime environment is not output device-dependent.

10. A method according to claim 7, wherein the associating of the intermediate language object to the electronic document comprises embedding within the electronic document.

11. A method according to claim 7, wherein the output device configured to execute the intermediate language object comprises an intermediate language interpreter to interpret the intermediate language object.

12. A method according to claim 7, wherein the output device comprises at least one of a printer, a facsimile machine, a copy machine, a scanner and a multifunction output device.

13. An output device resource update, the output device resource update being generated by a method comprising:
receiving an output device resource update;
transmitting the output device resource update to a common language runtime environment;
generating an intermediate language object encapsulating the output device resource update in the common language runtime environment;
associating the intermediate language object with an electronic document; and
communicating the electronic document and associated intermediate language object to an output device configured to execute the intermediate language object.

14. An output device resource update according to claim 13, wherein the output device resource update comprises at least one of a firmware update, a set of specialized rendering instructions and specialized content output.

15. An output device resource update according to claim 13, wherein the common language runtime environment is not output device-dependent.

16. An output device resource update according to claim 13, wherein the associating of the intermediate language object to the electronic document comprises embedding within the electronic document.

17. An output device resource update according to claim 13, wherein the output device configured to execute the intermediate language object comprises an intermediate language interpreter to interpret the intermediate language object.

18. An output device resource update according to claim 13, wherein the output device comprises at least one of a printer, a facsimile machine, a copy machine, a scanner and a multifunction output device.

19. An output device, the output device being configured to receive resource updates, comprising:
an input interface to receive an electronic document comprising an intermediate language object; and
an intermediate language interpreter, the intermediate language interpreter interpreting the intermediate language object to execute a resource update for the output device.

20. An output device according to claim 19, wherein the resource update comprises at least one of a firmware update, a set of specialized rendering instructions and specialized content output.

21. An output device according to claim 19, wherein the output device comprises at least one of a printer, a facsimile machine and a multifunction output device.
